# EUROPEAN PATENT SPECIFICATION

(11) **EP 1 531 663 B1**
(45) Date of publication and mention of the grant of the patent: **12.04.2006**
(21) Application number: 02767725.1
(22) Date of filing: 29.08.2002
(51) Int. Cl.: A01G 13/02

(54) **PLASTIC FILM FOR COVERAGE WITH LOOSE OPENINGS FOR WEIGHT INSERTION AT ITS EDGES**
ABDECKUNGSKUNSTSTOFFOLIE MIT SEITLICH GEFORMTEN TASCHEN ZUM UNTERBRINGEN EINES GEWICHTES
FILM PLASTIQUE DESTINE A COUVRIR DES OUVERTURES LACHES PERMETTANT DE RECEVOIR DU POIDS AU NIVEAU DE LEURS BORDS

(43) Date of publication of application: 25.05.2005
(73) Proprietor: Daios, Asterios, 59200 Naousa (GR)
(72) Inventor: Daios, Asterios, 59200 Naousa (GR)
(74) Representative: Argyriadis, Korinna
(86) International application number: PCT/GR2002/000047
(87) International publication number: WO 2004/019674

(56) References cited:
- WO-A-00/62597
- DE-U- 20 019 622
- DE-U- 29 500 393
- DE-U- 29 707 670
- DE-U- 29 919 489

## Description

The invention refers to a plastic film for coverage with loose openings for weight insertion at its edges that is used in linear cultivations whose edges (3) have been elongated up to 100 % and have been folded and welded onto the main part of the plastic film with consecutive umbrella weldings (7). Due to the elongation of its edges (3) and the shape of the umbrella weldings (7), consecutive hopper shaped loose openings (8) are formed along the edge of the film. During the use of the film and due to the inclination that the film has towards its edges the hopper shaped loose openings (8) can readily accumulate any fluid material (11, 12) and guide it by means of gravity to the weight vaults (9) where it is entrapped.

Several linear cultivations that are covered with plastic films in low tunnels (strawberries, watermelons, tomatoes etc) or with mulching films (asparagus) require cultivation works to be made while the cultivation line is covered with the film. The cultivation works are however hindered if the film is covered (buried) with soil along its edges. Several films have been developed that incorporate weight in pockets along their edges before or during their use which can be opened any time any cultivation work is required.

A high labour cost is required for the insertion of weight, that often reaches in monetary value the cost of the plastic film itself. This occurs because the soil is manually inserted at regular intervals in the pockets, through the openings that exist between the folding and the main body of the film. These openings are not distinct and are rather difficult to open for the user since they only open manually and very diligently because the sections of the plastic film between which these openings are formed cling together due to the fact that they are of the same length, as disclosed in DE-U-29500393. In such a plastic film it is impossible to think of an easy way of filling the pockets with soil and in particular of thinking of a mechanised way of filling them.

Furthermore filling the film with a weight material is a strenuous and time consuming process and even worse these pockets have to be filled under adverse weather conditions and during a season (usually in winter) that there are scarce labour resources. As a result many farmers do not fill the pockets with enough weight. Hence the wind can easily lift the film, damaging it and leaving the cultivation line exposed.

This is the most important disadvantage of the hereto known plastic films that incorporate weight at their edges.

In the present invention an integrated and innovative solution is proposed, for a plastic film that easily incorporates weight along its edges - almost automatically - during its use without any excessive labour cost, by forming loose openings on these edges. Hence the use of the film becomes a lot easier and considerably more economical. The incorporated weight can be soil, sand or mud or a combination of them since they are materials that abound in the field and they do not add any further cost.

The invention takes advantage of the natural property of various fluids to flow to the lowest points due to gravity. Moreover it takes advantage of the fact that the plastic films for coverage of linear cultivations are positioned in such a manner that their lowest points are located along their edges. According to the invention, as it will be shown in detail further on, the edges of the film are formed in such a fashion that the flow of the soil or sand or the mud that falls on the plastic film is readily and uniformly guided to the aforementioned edges, at a low labour cost and are entrapped.
Figure 1 exhibits the application of the plastic film with loose openings for weight insertion at its edges on a linear cultivation under low tunnels
Figure 2 exhibits one way of materialising the invention and a detail of it and Figure 3 shows several forms of the "umbrella" welding.

One of the ways of materialising the invention is described below:

A thin and oblong plastic film (1) of any length (a) and width (b) (a>>b), is produced using any polyolefin or a combination of them in virgin or recycled state. The plastic film (1) can incorporate several additives, it can be transparent or it can have any colour in each of its surfaces.

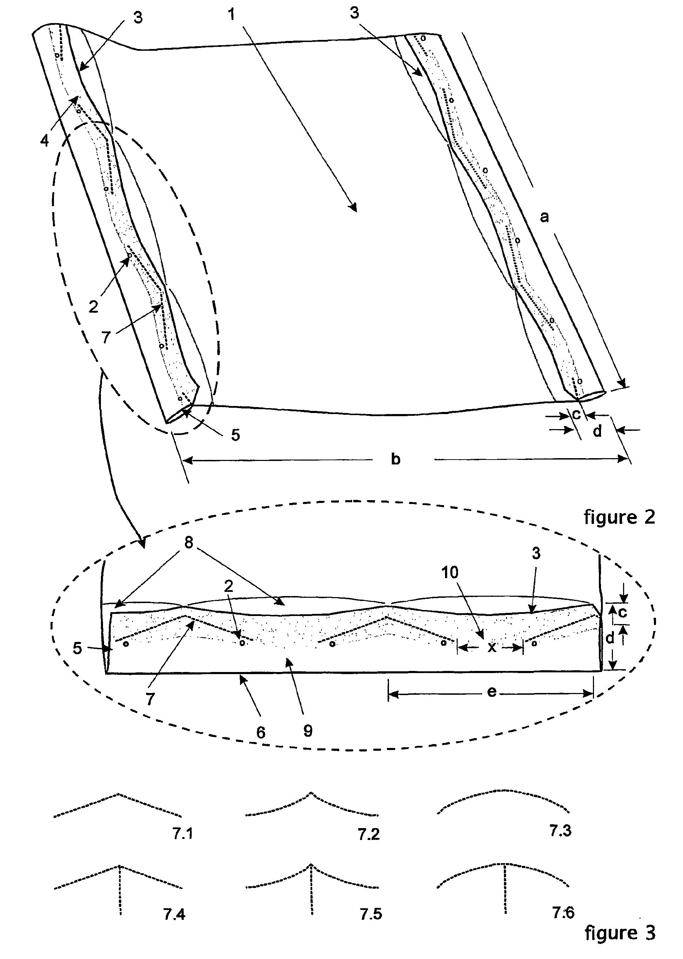

The two edges (3) along the length of the plastic film are lengthways elongated forming a zone of width (c) (Figure 2 with detail) less than 15 cm and preferably approximately 5 cm. One way of achieving this elongation is by pretensioning the edges of the plastic film. The edges (3) of the plastic film are elongated to a value between 0 % and 100 % so that they finally acquire a nominal length value that is up to 100 % higher compared to the length of the rest of the film. The elongation can be uniform across the length of the film or local and repeated. Subsequently the pretensioned edges (3) of the plastic film are folded to the main body of the film to a width (d) up to 20 cm and preferably 10 - 15 cm. Hence every folded strip (5), that can be elongated in its whole (c = d) or in a part of it (c < d), is looser compared to the rest of the plastic film.

When the plastic film that has elongated edges and that it was wound in a role, is unwound, the edges are "separated" from the main body of the plastic film. This is due to the fact that the two superimposed parts of the plastic film are of different length (the elongated sections are looser compared to the rest of the plastic film).

The opposite is true with the normal plastic films where the lack of loose edges lead to having the edges stick to the main body of the plastic film.

Namely after the loose lengthways edges are created so that they easily open - separate - each folded stripe (5) is subsequently welded to the main body of the plastic film with consequent - lengthways - weldings (7) which have the "umbrella" shape. Between two subsequent umbrella weldings (7) of the main body of the plastic film and the elongated - loose - part (4) of the folded stripe (5), a hopper shaped loose opening is formed (8). Each hopper shaped loose openings (8) during the use of the film is readily opened, due to difference in length of the two superimposed parts of the film and the shape of the umbrella weldings. It is of paramount importance that the weldings have an umbrella shape since the hopper shaped loose openings (8) can only be formed in this manner - taking advantage of the loosen edge that aims at accumulating the fluid material.

The hopper shaped loose opening (8) is oblong and it could be considered similar to a boat without bottom.

Each umbrella welding (7) can have any shape contributing to the formation of the hopper shaped loose opening (8) and the weight vault (9). Such umbrella shapes can comprise linear or curved components or a combination of them. The umbrella weldings (7) can comprise only the "roof" (Figure 3, 7.1, 7.2, 7.3) or the "base" (Figure 3, 7.4, 7.5, 7.6) as well and they must be placed so that the tip of the roof points - preferably - towards the mid-section of the plastic film. The distance (e) of two consecutive umbrella weldings (7) can be of any value and preferably up to 50 cm, hence that would also be the length of the hopper (8). The umbrella welding (7) can stem from the crease (6) or at a small distance from it and end at the initial edge (3) of the plastic film or at a small distance from it.

The opening (10) through which the accumulated soil is inserted by means of gravity to each vault (9) that is simultaneously the bottom of the hopper shaped loose opening, is defined by the distance (e) between the two consecutive umbrella weldings (7) in combination with their dimensions. The construction is so that the length (x) of the opening (10) measured along the plastic film is preferably less than 20 cm.

At the weight vaults (9) small holes (2) can be made - preferably exactly below the edges of the roof of the welding - so that the excess water flows out of the film.

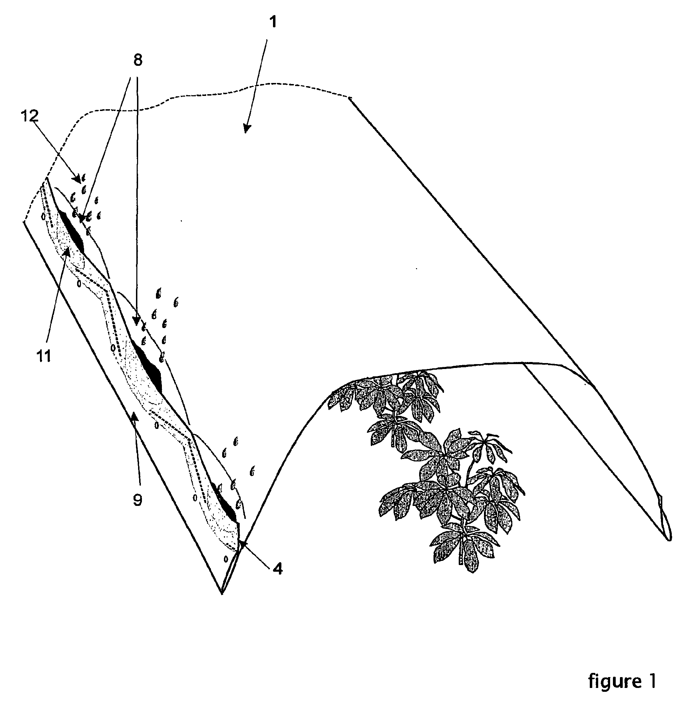

When the plastic film is unwound and applied on the field (Figure 1) the loose part (4) opens due to the different tension levels - or different length - forming a hopper shaped loose opening (8) - without any particular effort. During the application of the film, soil is either manually (e.g. by shoveling soil on the film) or by any mechanised means thrown on top of it. Most of the amount of the soil will be inserted through the hopper shaped loose openings hopper will slide into the weight insertion vaults (9) due to the inclination of the plastic film at its edges. The rest of the amount of the soil will be soaked by rain water (natural or artificial) and will be led as mud into the weight insertion vaults (9) providing the required weight whereas the water will finally leak through the holes (2) out of the plastic film.

## Claims

1. Plastic film for coverage with loose openings for weight insertion at its edges (1) of any length (a) and width (b) where a >> b with weight insertion vaults along its edges that is **characterised by** the fact that its edges (3) lengthways are elongated to a value of up to 100%, uniformly across its length or locally, and are folded and welded to the main body of the film with consecutive lengthways umbrella weldings (7.1 to 7.6) so that hopper shaped loose openings (8) are formed, for weight insertion into the weight storage vaults.

2. Plastic film for coverage with loose openings for weight insertion at its edges (1), according to claim 1, that is **characterised by** the fact that the elongated zone (4) at each of its edges (3) is 15 cm wide and preferably 0 - 5 cm whereas the folded stripe (5) that incorporates the elongated zone (4) is up to 20 cm wide and preferably 10 - 15 cm.

3. Plastic film for coverage with loose openings for weight insertion at its edges (1), according to claims 1 and 2 that is **characterised by** the fact that the consecutive umbrella shaped weldings (7.1 to 7.6) are at a distance (e) from each other preferably up to 100 cm and form a non-welded opening (10) along the plastic film of length (x) up to 20 cm.

4. Plastic film for coverage with loose openings for weight insertion at its edges (1), according to claims 1 - 3 that is **characterised by** the fact that the umbrella shaped welding (7) comprises only the roof that is of any shape (7.1, 7.2, 7.3) or comprises the base as well that is of any shape (7.4, 7.5, 7.6) and in such a manner that the roof as well as the base have any inclination with respect to the length of the plastic film, and preferably the tip of the roof points at the mid-section of the plastic film.

## Patentansprüche

1. Plastikfolie zur Abdeckung mit losen Öffnungen für die Einfüllung von Gewichten mit beliebiger Länge (a) und Breite (b) an den Rändern (1), wobei a >> b, mit Wölbungen zur Einfüllung von Gewichten an den Rändern, die durch die Tatsache **gekennzeichnet** ist, daß die Längsränder (3) einheitlich entlang der gesamten Längskante oder lokal um einen Wert von bis zu 100% verlängert sind, gefaltet und mit aufeinander folgenden schirmförmigen Schweißungen entlang der Längsseite mit der Hauptfolie verschweißt sind (7.1 bis 7.6), so daß trichterförmige lose Öffnungen (8) für die Einfüllung von Gewichten in die Gewicht-Wölbungen gebildet werden.

2. Plastikfolie zur Abdeckung mit losen Öffnungen für die Einfüllung von Gewichten an den Rändern (1), gemäß Anspruch 1, die durch die Tatsache **gekennzeichnet** ist, daß die verlängerte Zone (4) an jedem der Ränder (3) 15 cm breit ist und vorzugsweise 0 - 5 cm, wohingegen der gefaltete Streifen (5), welcher die verlängerte Zone (4) umfaßt, bis zu 20 cm breit ist und vorzugsweise 10 - 15 cm.

3. Plastikfolie zur Abdeckung mit losen Öffnungen für die Einfüllung von Gewichten an den Rändern (1), gemäß den Ansprüchen 1 und 2, die durch die Tatsache **gekennzeichnet** ist, daß die aufeinander folgenden schirmförmigen Schweißungen (7.1 bis 7.6) voneinander eine Entfernung (e) von vorzugsweise bis zu 100 cm haben und entlang der Plastikfolie eine nicht verschweißte Öffnung (10) mit einer Länge (x) von bis zu 20 cm bilden.

4. Plastikfolie zur Abdeckung mit losen Öffnungen für die Einfüllung von Gewichten an den Rändern (1), gemäß den Ansprüchen 1-3, die durch die Tatsache **gekennzeichnet** ist, daß die schirmförmige Schweißung (7) nur die obere Folienlage von beliebiger Form umfaßt (7.1 , 7.2, 7.3) oder auch die untere Folienlage von beliebiger Form umfaßt (7.4, 7.5, 7.6), und zwar in einer solchen Art und Weise, daß die obere und die untere Folienlage zur Länge der Plastikfolie einen beliebigen Neigungswinkel einnehmen, und die Spitze der oberen Folienlage vorzugsweise in Richtung der Mitte der Plastikfolie zeigt.

## Revendications

1. Feuille de plastique pour couvrir à ouvertures larges pour l'insertion de poids en ses bords (1) de toute longueur (a) et largeur (b) où a >> b à insertion de poids le long de ses bords, **caractérisée en ce que** ses bords (3) dans le sens de la longueur sont allongés jusqu'à 100%, de façon uniforme sur toute sa longueur ou localement, et sont pliés et soudés au corps principal de la feuille par soudures successives en forme de parapluie (7.1 à 7.6) de façon à ce que de larges ouvertures d'alimentation (8) soient formées pour l'insertion de poids dans les poches de stockage des poids.

2. Feuille de plastique pour couvrir à ouvertures larges pour l'insertion de poids en ses bords (1), selon la revendication 1, **caractérisée en ce que** la partie allongée (4) de chacun de ses bords (3) est d'une largeur de 15 cm et, de préférence, 0 - 5 cm, tandis que la bande pliée (5) qui comporte la partie allongée (4) est d'une largeur jusqu'à 20 cm et, de préférence, de 10 - 15 cm.

3. Feuille de plastique pour couvrir à ouvertures larges pour l'insertion de poids en ses bords (1), selon les revendications 1 et 2, **caractérisée en ce que** les soudures consécutives en forme de parapluie (7.1 à 7.6) sont séparées par une distance (e) allant de préférence jusqu'à 100 cm et forment une ouverture non soudée (10) le long de la feuille de plastique d'une longueur (x) jusqu'à 20 cm.

4. Feuille de plastique pour couvrir à ouvertures larges pour l'insertion de poids en ses bords (1), selon les revendications 1 à 3, **caractérisée en ce que** la soudure en forme de parapluie (7) comprend uniquement le toit qui est d'une forme quelconque (7.1, 7.2, 7.3) ou bien comprend également le fond, de forme quelconque, (7.4, 7.5, 7.6) et de façon telle à ce que le toit ainsi que le fond peuvent présenter tout inclinaison par rapport à la longueur de la feuille en plastique et, de préférence, au sommet des points du toit dans la partie centrale de la feuille de plastique.
